# EUROPÄISCHE PATENTSCHRIFT

(11) **EP 4 730 064 B1**
(45) Veröffentlichungstag und Bekanntmachung des Hinweises auf die Patenterteilung: **02.12.2026**
(21) Anmeldenummer: 24207805.3
(22) Anmeldetag: 21.10.2024
(51) Int. Cl.: G05D 1/249, G05D 1/617, G05D 1/698, F16P 3/14, G05B 19/418

(54) **SYSTEM ZUR KONTROLLE EINES ÜBERGANGS ZWISCHEN EINEM ERSTEN BEREICH UND EINEM ZWEITEN BEREICH IN EINER BETRIEBSUMGEBUNG**
SYSTEM FOR CONTROLLING A TRANSITION BETWEEN A FIRST AREA AND A SECOND AREA IN AN OPERATING ENVIRONMENT
SYSTÈME DE CONTRÔLE D'UNE TRANSITION ENTRE UNE PREMIÈRE ZONE ET UNE SECONDE ZONE DANS UN ENVIRONNEMENT DE FONCTIONNEMENT

(43) Veröffentlichungstag der Anmeldung: 22.04.2026
(73) Patentinhaber: Jungheinrich Systemlösungen GmbH, 8042 Graz (AT); Jungheinrich AG, 22047 Hamburg (DE)
(72) Erfinder: Hohmann, Paul, 85368 Moosburg (DE); Engert, Christian, 97268 Kirchheim (DE); Wiesner, Dominik, 8010 Graz (AT)
(74) Vertreter: Weickmann & Weickmann PartmbB

(56) Entgegenhaltungen:
- EP-A1- 4 290 118
- DE-A1- 102021 002 636
- DE-U1- 202018 101 285

## Beschreibung

Die vorliegende Erfindung betrifft ein System zur Kontrolle eines Übergangs zwischen einem ersten Bereich und einem zweiten Bereich in einer Betriebsumgebung, eine Logistikeinrichtung, in welcher ein derartiges System zur Kontrolle eines Übergangs zwischen einem ersten Bereich und einem zweiten Bereich umfasst, sowie ein Verfahren zur Kontrolle eines Übergangs zwischen einem ersten Bereich und einem zweiten Bereich einer Betriebsumgebung.

Es ist bekannt, in Betriebsumgebungen, wie beispielsweise in Logistikeinrichtungen, von Fahrzeugen befahrbare Bereiche zu unterteilen, beispielsweise hinsichtlich unterschiedlicher Sicherheitsniveaus. Unter anderem besteht hierbei die Möglichkeit, eine Unterteilung in frei zugängliche Bereiche, in welchen ein Mischverkehr erlaubt ist und sich demzufolge also auch Personen aufhalten dürfen, und einen Automatikbereich vorzunehmen, in welchem lediglich automatisierte Fahrzeuge und Vorrichtungen betrieben werden dürfen. Hierbei werden in dem frei zugänglichen Bereich auch automatisierte oder autonome Fahrzeuge betrieben, die jedoch mit Sensoren und einer entsprechenden Datenverarbeitungseinheit ausgestattet sein müssen, um auch bei Begegnungen mit Personen und manuell geführten Fahrzeugen sicher betrieben zu werden. Diese sicheren automatischen oder automatisierten Fahrzeuge und zusätzlich nicht sichere automatisierte Fahrzeuge dürfen ferner in dem Automatikbereich betrieben werden, zu welchem allerdings manuell geführten Fahrzeugen und Personen im Betrieb der Zugang untersagt ist. Hierbei verfügen die nicht sicheren automatisierten Fahrzeuge nicht über eine entsprechende Sensorik und Datenverarbeitung, um auch bei Begegnungen mit manuell geführten Fahrzeugen und insbesondere Personen sicher betrieben zu werden.

Wenn sich nun ein menschlicher Bediener, beispielsweise zum Durchführen einer Wartung oder Ähnlichem, in einen solchen Automatikbereich hineinbewegen möchte, so ist beispielsweise durch eine geeignete Sicherheitstür sicherzustellen, dass entsprechende in diesem Automatikbereich befindliche Fahrzeuge und Vorrichtungen während der Zeit des Aufenthalts der Person stillstehen, um Unfälle zu vermeiden. Hierbei wird in der Regel bei Durchqueren der Sicherheitstür der Betrieb der nicht sicheren automatisierten Fahrzeuge in dem Automatikbereich durch Betätigen und Auslösen entsprechender Sensoren, beispielsweise Sicherheitsschalter oder Ähnlichem, unterbrochen. Dies liegt daran, dass in dem Automatikbereich selbst in einem normalen Betrieb aufgrund der angenommenen Abwesenheit von menschlichen Personen an sich niedrigere Sicherheitsstandards hinsichtlich des Betriebs von Fahrzeugen und Vorrichtungen eingehalten werden können, da aufgrund der Betriebsweise des Automatikbereichs Wechselwirkungen und Unfälle mit menschlichen Personen von vorneherein ausgeschlossen sein sollen.

Andererseits besteht jedoch in bestimmten Betriebsabläufen die Notwendigkeit, einem Fahrzeug einen Zugang zu einem solchen Sicherheitsbereich, wie beispielsweise dem angesprochenen Automatikbereich einer Logistikeinrichtung, zu ermöglichen, insbesondere um Waren in diesen Sicherheitsbereich hinein zu transportieren. Zu diesem Zweck ist es notwendig, ein System zur Kontrolle des Zugangs zu dem Sicherheitsbereich, beziehungsweise allgemeiner gesprochen zur Kontrolle eines Übergangs zwischen einem ersten Bereich und einem zweiten Bereich in der entsprechenden Betriebsumgebung, bereitzustellen. Hierdurch wird einerseits in einem normalen und vorgesehenen Betrieb entsprechenden sicheren Fahrzeugen ermöglicht, aus einem frei zugänglichen Bereich der Betriebsumgebung, wie beispielsweise dem angesprochenen Bereich mit Mischverkehr, in den Sicherheitsbereich einzufahren und umgekehrt, während es andererseits menschlichen Personen oder nicht autorisierten Fahrzeugen durch das System nicht gestattet wird, in den Sicherheitsbereich einzutreten oder einzufahren.

Hierbei ist es gleichzeitig wünschenswert, ein möglichst einfaches und effizientes Passieren eines solchen Systems für autorisierte Fahrzeuge zu ermöglichen, da beispielsweise beim Einsatz von Schleusen mit mehreren Türen oder Ähnlichem eine Verzögerung oder gar ein Anhalten der entsprechenden Fahrzeuge notwendig wird, was vor dem Hintergrund eines möglichst reibungslosen Betriebs davon als nachteilhaft zu bewerten ist. Bei den autorisierten Fahrzeugen handelt es sich in der Regel um sichere automatische oder automatisierte Fahrzeuge, beispielsweise fahrerlose Transportsysteme oder Unterfahr-Shuttle.

Hinsichtlich bekannten Stands der Technik sei insbesondere auf die DE 10 2021 002636 A1 verwiesen, welche ein System zur Kontrolle eines Übergangs zwischen Bereichen mit einem Übergangsbereich lehrt, in welchem eine Überwachungsvorrichtung mit mehreren Sensoreinheiten zum Aufspannen eines Überwachungsfelds in dem Übergangsbereich zusammen mit einer Steuereinheit bereitgestellt ist, welche mit sich in der Umgebung fortbewegenden Fahrzeugen kommuniziert und einen Durchgangskorridor durch den Durchgangsbereich auf ein Empfangen einer Anfrage von einem in der Umgebung befindlichen Fahrzeug freigeben kann.

Dementsprechend ist es die Aufgabe der vorliegenden Erfindung, ein System zur Kontrolle eines Übergangs zwischen einem ersten Bereich und einem zweiten Bereich in einer Betriebsumgebung bereitzustellen, welches einerseits effiziente Übergänge zwischen den beiden Bereichen erlaubt, jedoch entsprechende Übergänge durch menschliche Bediener oder nicht-autorisierte Fahrzeuge zuverlässig verhindert, beziehungsweise in einem solchen Fall einen unzulässigen Betriebszustand erkennt, auf dessen Grundlage dann entsprechende Maßnahmen getroffen werden können.

Zu diesem Zweck umfasst das erfindungsgemäße System einen Übergangsbereich, welcher den ersten Bereich von dem zweiten Bereich der Betriebsumgebung trennt und welcher an beiden Seiten in einer Breitenrichtung begrenzt ist, eine Überwachungseinrichtung, welche wenigstens zwei einander bezüglich des Übergangsbereichs gegenüberliegende erste Sensoreinheiten umfasst und dazu eingerichtet ist, in dem Übergangsbereich ein im Wesentlichen horizontal ausgerichtetes Überwachungsfeld mit einer vorbestimmten Ausdehnung in einer Tiefenrichtung, welches sich über die gesamte Breite des Übergangsbereichs erstreckt, und wenigstens ein Paar von Eintrittsfeldern aufzuspannen, welche sich in der Tiefenrichtung bezüglich des Überwachungsfelds erstrecken und jeweils eine vorbestimmte Ausdehnung in der Breitenrichtung und der Tiefenrichtung aufweisen, sowie eine Steuereinheit, welche mit der Überwachungseinrichtung betriebsmäßig gekoppelt und ferner zu einer Kommunikation mit sich in der Betriebsumgebung fortbewegenden Fahrzeugen eingerichtet ist, wobei die Steuereinheit ferner dazu eingerichtet ist, von den Fahrzeugen Anfragen für ein Durchfahren des Übergangsbereichs zu empfangen und bei einem Empfang einer derartigen Anfrage die Schritte auszuführen eines Überwachens eines der Paare von Eintrittsfeldern hinsichtlich eines im Wesentlichen zeitgleichen Verletzens durch ein Fahrzeug, bei einem Feststellen eines derartigen zeitgleichen Verletzens des entsprechenden Paars von Eintrittsfeldern, eines Freigebens eines Durchfahrtkorridors durch das Überwachungsfeld, wobei der Durchfahrtkorridor eine vorbestimmte Breite aufweist und in Verlängerung des Paars von Eintrittsfeldern liegt, und eines Überwachens der Durchfahrt des Fahrzeugs durch den Durchfahrtkorridor und bei einem Feststellen eines Abschlusses der Durchfahrt, eines Deaktivierens des Durchfahrtkorridors.

Hierbei sei zunächst darauf hingewiesen, dass die seitliche Begrenzung des Übergangsbereichs beispielsweise durch eine bauliche Begrenzung erzielt werden kann, insbesondere indem der Übergangsbereich im Bereich eines einfachen baulichen Durchgangs zwischen dem ersten Bereich und dem zweiten Bereich gebildet sein kann, beispielsweise einer Ausnehmung in einem Zaun oder einer Wand, so dass die bauliche Begrenzung sowohl in der Höhen- als auch der Breitenrichtung durch die entsprechende Ausnehmung vorgegeben ist. Alternativ könnte die seitliche und ggf. zusätzlich eine obere Begrenzung des Überwachungsbereichs jedoch ebenfalls durch weitere geeignete Sensorvorrichtungen in diesen Bereichen erzielt werden, insbesondere sogenannte Lichtzäune, die den Begrenzungsbereich überwachen, wobei bei einem Eintritt in diesen Bereich geeignete Maßnahmen eingeleitet werden können, beispielsweise analog zu einer Verletzung des Überwachungsfeldes in dem Übergangsbereich.

Im erstgenannten Beispiel einer baulichen Begrenzung kann sich das Überwachungsfeld dementsprechend in einer im Wesentlichen horizontaler Ebene im Bereich dieser baulichen Trennung in Tiefenrichtung zwischen dem ersten Bereich und dem zweiten Bereich erstrecken, also in einer Ebene senkrecht zu der durch den entsprechenden Durchgang definierten Ebene. Letztlich ist diese seitliche und ggf. obere Begrenzung des Übergangsbereichs jedoch lediglich dahingehend relevant, dass hierdurch ein Umfahren des Übergangbereichs verhindert wird und dementsprechend Übergänge zwischen dem ersten Bereich und dem zweiten Bereich lediglich an Positionen stattfinden können, welche in der Tat durch das erfindungsgemäße System überwacht werden.

Des Weiteren sei darauf hingewiesen, dass die Erstreckung der Eintrittsfelder in der Tiefenrichtung bezüglich des Überwachungsfelds derart zu verstehen ist, dass sich diese entweder direkt an das Überwachungsfeld anschließen können oder auch ein gewisser Abstand dazwischen vorgesehen sein kann, ohne dass dies Auswirkungen auf die vorgesehene Funktionalität der Eintrittsfelder haben wird.

Weiterhin sei darauf hingewiesen, dass die angesprochene Überwachungseinrichtung sowie die Steuereinheit auf verschiedene Arten miteinander integriert sein können, beispielsweise durch zwei unabhängige und betriebsmäßig miteinander gekoppelte Komponenten ausgeführt sein können oder in einem anderen Fall die Steuereinheit auch bereits wenigstens teilweise mit der Auswertung der von den wenigstens zwei Sensoreinheiten gelieferten Daten betraut sein kann, so dass sie einen Teil der Funktionalität der Überwachungseinrichtung selbst übernimmt.

Des Weiteren sei darauf hingewiesen, dass das angesprochene Deaktivieren des Durchfahrtkorridors nach einem abgeschlossenen Durchfahren durch ein Fahrzeug derart zu verstellen ist, dass die Freigabe zum Durchfahren dieses Korridors aufgehoben oder beendet wird, so dass zwischen dem angesprochenen Deaktivieren des Durchfahrtkorridors und einer erneut möglichen Durchfahrt des Übergangsbereichs eine erneute Anfrage für ein Durchfahren davon bei der Steuereinheit eingehen muss.

Des Weiteren sei an dieser Stelle darauf hingewiesen, dass in dem erfindungsgemäßen System das Durchfahren des Durchfahrtkorridors nach vorhergehendem Anfragen für ein Durchfahren die einzige erlaubte oder zulässige Möglichkeit zum Passieren des Übergangsbereichs darstellt und sämtliche anderen Eingriffe in ein Überwachungsfeld stets als unzulässige Verletzung davon registriert und bewertet werden. Dies umfasst unter anderem ein Verletzen des Überwachungsfelds in einem Zustand, in welchem von der Steuereinheit noch keine Anfrage für ein Durchfahren des Übergangsbereichs empfangen worden ist und dementsprechend noch kein Durchfahrtkorridor freigegeben worden ist, oder beispielsweise auch einen Zustand, in welchem der Durchfahrtkorridor wenigstens teilweise verlassen wird, das heißt beispielsweise ein Fahrzeug oder eine Person in einem Zustand eines freigegebenen Durchfahrtkorridors das Überwachungsfeld außerhalb von diesem Korridor verletzt.

Hinsichtlich der zu betrachtenden Eintrittsfelder sei ferner darauf hingewiesen, dass für Fahrzeuge, welche eine entsprechende Anfrage zum Durchfahren des Übergangsbereichs an die Steuereinheit senden können, die Positionen bzw. die vorgesehenen Fahrtrouten dieser Fahrzeuge bekannt sind und dementsprechend stets Eintrittsfelder an geeigneten Positionen und insbesondere Seiten des Überwachungsfelds aktiviert und überwacht werden können. Hierbei sei bereits an dieser Stelle darauf hingewiesen, dass im Rahmen der Anfragen von Fahrzeugen weitere Fahrzeug-spezifische Informationen übermittelt werden können, beispielsweise Zeitstempel, Fahrzeugtypen oder Kennungen bestimmter Fahrzeuge, Positionen und/oder geplante Fahrrouten, oder auch ein Beladungszustand eines entsprechenden Fahrzeugs, wobei im Folgenden noch weiter darauf eingegangen werden wird, in welcher Weise derartige zusätzliche Informationen von der Steuereinheit zur Erhöhung der Sicherheit des Systems verwendet werden können.

In jedem Fall wird jedoch deutlich, dass die Art und Weise der Ausgestaltung des erfindungsgemäßen Systems und insbesondere die Überwachung der Eintrittsfelder auf ein Empfangen einer Anfrage zum Passieren des Übergangsbereichs hin sowie die nachfolgende Freischaltung eines räumlich beschränkten Durchfahrtkorridors für ein Fahrzeug sämtlich Maßnahmen sind, durch welche ausgeschlossen wird, dass eine unbefugte Person oder ein nicht registriertes Fahrzeug den Übergangsbereich passieren könnte.

In diesem Zusammenhang sei darauf hingewiesen, dass die Steuereinheit das Aktivieren eines Paars von Eintrittsfeldern auch erst nach einem Empfangen einer Anfrage für ein Durchfahren des Übergangsbereichs anweisen kann, das heißt, dass in einem Zustand, in welchem keine derartige Anfrage empfangen worden ist, lediglich das horizontale Überwachungsfeld aufgespannt würde, da in einem solchen Betriebszustand ein zulässiges Passieren des Übergangsbereichs ohnehin in keiner Weise möglich ist. Alternativ wäre jedoch auch denkbar, dass entsprechende Eintrittsfelder dauerhaft überwacht würden, ohne vorhergehende Anfrage jedoch ein Betreten davon nicht erlaubt ist, so dass sie in diesem Zustand im Wesentlichen eine Verlängerung des Überwachungsfeld darstellen würden.

Zur weiteren Erhöhung der Sicherheit des erfindungsgemäßen Systems kann in diesem die Steuereinheit ferner dazu eingerichtet sein, den Durchfahrtkorridor bezüglich einer vorgesehenen Durchfahrtrichtung von den Eintrittsfeldern aus in einen ersten Durchfahrtabschnitt und einen zweiten Durchfahrtabschnitt zu unterteilen und zu überwachen, dass zunächst der erste Durchfahrtabschnitt und dann der zweite Durchfahrtabschnitt betreten wird, und/oder jedem Paar von Eintrittsfeldern bezogen auf das horizontale Überwachungsfeld ein weiteres Paar von Eintrittsfeldern gegenüber liegen kann und die Steuereinheit ferner dazu eingerichtet sein kann, mittels der Überwachung der Eintrittsfelder und des horizontalen Überwachungsfelds eine Durchfahrtrichtung eines entsprechenden Fahrzeugs zu ermitteln. Dementsprechend werden durch diese zusätzlichen Maßnahmen jeweilige Fahrtrichtungen von entsprechenden Fahrzeugen verifiziert und es können beispielsweise Fälle ausgeschlossen werden, in welchen eine Person versuchen könnte, entgegen einer vorgesehenen Fahrtrichtung eines Fahrzeugs einen Durchfahrtkorridor zu passieren. Weiterhin kann in der eben beschriebenen Ausführungsform sichergestellt werden, dass keine Person hinter einem Fahrzeug einen entsprechenden Korridor durchläuft, da in einem solchen Fall nach einem ermittelten Einfahren in den zweiten Durchfahrtsabschnitt und einem entsprechenden nachfolgenden Verlassen des ersten Durchfahrtsabschnitts ein erneutes Betreten des zweiten Durchfahrtsabschnitts durch die Person registriert werden würde, was als unzulässiger Vorgang von dem System bewertet würde.

Eine weitere Maßnahme zur Erhöhung der Betriebssicherheit des erfindungsgemäßen Systems kann darin bestehen, dass die Steuereinheit ferner dazu eingerichtet sein kann, nach einem Empfangen einer Anfrage für ein Durchfahren des Übergangsbereichs eine Zeitnahme zu beginnen und die Eintrittsfelder und/oder den Durchfahrtkorridor nach einer vorbestimmten maximalen Zeitspanne zu deaktivieren und/oder zu überwachen, dass ein Durchfahren des Durchfahrtkorridors wenigstens eine vorbestimmte minimale Zeitspanne benötigt. Dementsprechend kann auf diese Weise ebenfalls sichergestellt werden, dass ein vorgesehener Betrieb entsprechender Fahrzeuge in Zusammenwirkung mit dem erfindungsgemäßen System eingehalten wird, indem durch geeignete Wahl der maximalen und/oder minimalen Zeitspannen sichergestellt werden kann, dass entsprechende Fahrzeuge sich in der erwarteten Weise durch den Übergangsbereich bewegen. Sollte hierbei beispielsweise festgestellt werden, dass nach einem Empfang einer Anfrage eine vorbestimmte maximale Zeitspanne abläuft, bevor ein Paar von Eintrittsfeldern in der vorgesehenen Weise betreten werden, so könnte entweder lediglich der Zustand des Systems zurückgesetzt werden und auf eine erneute Anfrage gewartet werden, es wäre allerdings auch bereits möglich, hier eine Warnung an einen menschlichen Bediener auszugeben oder wenigstens Teile der Anlage stillzulegen, da offensichtlich ein vorgesehener Betriebsablauf nicht in der gewünschten Weise durchgeführt werden konnte. In gleicher Weise kann ebenfalls ermittelt werden, ob der Durchfahrtkorridor oder der erste und zweite Durchfahrtabschnitt zu lang oder zu kurz belegt sind und so ein unerwünschter Betriebsablauf ermittelt werden, weil das eingefahrene Objekt länger/ kürzer ist als angemeldet bzw. schneller oder langsamer unterwegs als angemeldet.

Um die Betriebseffizienz des erfindungsgemäßen Systems weiter zu erhöhen und beispielsweise gleichzeitigen gegenläufigen Verkehr durch den Übergangsbereich von dem ersten Bereich in den zweiten Bereich sowie dem zweiten Bereich in den ersten Bereich zuzulassen, kann die Steuereinheit ferner dazu eingerichtet sein, wenigstens zwei in Breitenrichtung beabstandete Durchfahrtkorridore mit diesen zugeordneten Eintrittsfeldern freigeben zu können. Hierbei können entsprechende Korridore von vorneherein lediglich für eine Durchfahren in entgegengesetzten Richtungen freigegeben sein, es wären jedoch auch Konstellationen denkbar, in welchen zwei Korridore in derselben Richtung gleichzeitig freigeschaltet werden könnten, um ein paralleles Durchfahren davon in derselben Richtung zu ermöglichen.

Insbesondere in derartigen Ausführungsformen eines erfindungsgemäßen Systems, in welchem mehr als ein Durchfahrtkorridor zur selben Zeit freigeschaltet sein kann, kann ferner die Überwachungseinrichtung wenigstens eine weitere Sensoreinheit umfassen, welche oberhalb des horizontalen Überwachungsfelds angeordnet ist, beispielsweise an einer Oberseite einer baulich begrenzten Durchfahrt in dem Übergangsbereich. Hierdurch können Abschattungen behoben werden, welche auf jeweiligen Rückseiten der entsprechenden den Übergangsbereich durchfahrenden Fahrzeuge für die bereits angesprochenen ersten Sensoreinheiten im Bereich ihrer Überwachungsebene vorliegen, insbesondere zwischen zwei Fahrzeugen, wenn diese gleichzeitig die Anlage passieren.

Ferner besteht die Möglichkeit, dass die Überwachungseinrichtung dazu eingerichtet ist, mittels der wenigstens einen weiteren Sensoreinheit ein weiteres, im Wesentlichen vertikales Überwachungsfeld aufzuspannen, wobei der wenigstens eine Durchfahrtkorridor mittels des vertikalen Überwachungsfelds hinsichtlich seiner Höhe begrenzbar ist und/oder die Überwachungseinrichtung ferner dazu eingerichtet ist, ein schmales Feld innerhalb des wenigstens einen Durchfahrtkorridors aufzuspannen, insbesondere mittels eines horizontal ausgerichteten, in Fahrtrichtung sehr schmalen Überwachungsfeldes oder einer quer zur Fahrtrichtung verlaufenden Lichtschranke. Hierbei kann dieses zusätzliche vertikale Überwachungsfeld eine entsprechende bauliche Begrenzung des Übergangsbereichs vollständig oder teilweise überdecken, so dass mittels einer geeigneten Ausgestaltung eines solchen Felds beispielsweise einzelne Höhenabschnitte überwacht werden können oder eine vollständige Überdeckung in dem entsprechenden Bereich gebildet wird. In jedem Fall stellt eine derartige vertikale Begrenzung des Durchfahrtskorridors einen weiteren Sicherheitsmechanismus dar, da auf diese Weise beispielsweise Fälle ausgeschlossen werden können, in welchen eine Person versucht, auf einem regulär den Überwachungsbereich durchfahrenden Fahrzeug mitzufahren. Ebenfalls kann durch das vertikale Überwachungsfeld und/oder das schmale Feld sichergestellt werden, dass nicht zwei Objekte in einem geringen Abstand hintereinander einen entsprechenden Durchfahrtkorridor durchqueren, beispielsweise eine Person knapp vor oder hinter einem Fahrzeug. Die angesprochenen sehr schmalen Felder können hierbei beispielsweise von den angesprochenen Sensoreinheiten der Überwachungseinheit selbst oder zusätzlichen Sensoreinheiten aufgespannt werden und typischerweise Breiten im Bereich von Millimetern oder wenigen Zentimetern aufweisen, so dass sie im Wesentlichen die Wirkung einer Lichtschranke nachbilden können.

Weiter sei darauf hingewiesen, dass die Steuereinheit ferner dazu eingerichtet sein kann, die minimale Zeitspanne und/oder die maximale Zeitspanne und/oder die Höhe und/oder Breite des Durchfahrtkorridors anhand wenigstens einer Eigenschaft des entsprechenden Fahrzeugs festzulegen bzw. anzupassen, welche in Form von fahrzeugspezifischen Informationen im Zusammenhang mit der Anfrage für ein Durchfahren empfangen worden ist. Wie bereits weiter oben angedeutet, können entsprechende fahrzeugspezifische Informationen unter anderem den Fahrzeugtyp oder eine Fahrzeugkennung, einen Beladungszustand und Ähnliches umfassen, wobei beispielsweise davon ausgegangen werden kann, dass bei einem schwer beladenen Fahrzeug dessen Fahrgeschwindigkeit verringert sein kann und dementsprechend eine maximale Zeitspanne für das Durchfahren des Durchfahrtkorridors angepasst werden müsste oder die Höhe des Durchfahrtskorridors aufgrund der getragenen Last erhöht werden müsste. Ferner kann anhand des Fahrzeugtyps von vorneherein die Höhe des Durchfahrtkorridors und/oder dessen Breite festgelegt werden, um eine noch präzisere Festlegung der Abmessungen davon auf ein bestimmtes Fahrzeug zu ermöglichen und damit die Sicherheit des erfindungsgemäßen Systems hinsichtlich unbefugter Zugänge weiter zu erhöhen.

Zudem kann die Steuereinheit ferner dazu eingerichtet sein, eine Anfrage für ein Durchfahren des Übergangsbereichs lediglich dann zu akzeptieren, wenn ein momentaner Abstand des entsprechenden Fahrzeugs von dem horizontalen Überwachungsfeld unterhalb eines vorbestimmten maximalen Abstands liegt, welcher vorzugsweise 180mm oder weniger betragen kann. Auch hierdurch können Fälle ausgeschlossen werden, in welchen beispielsweise eine Person versuchen könnte, sich vor einem an sich regulär angemeldeten Fahrzeug durch einen entsprechenden Durchfahrtkorridor hindurchzubewegen. Die zu diesem Zweck notwendigen Daten hinsichtlich des Abstands bzw. der Position des entsprechenden Fahrzeugs relativ zu dem Überwachungsfeld können unter Anderem zusammen mit der Anfrage für das Durchfahren des Übergangsbereichs von dem Fahrzeug gesendet werden, sofern dies über eine ausreichend präzise Selbstlokalisierungsfunktion verfügt, oder es kann eine eigene Sensorik vorgesehen sein, welche mit der Steuereinheit des Systems gekoppelt und dazu in der Lage ist, einen Abstand bzw. eine Position eines Fahrzeugs bezüglich des horizontalen Überwachungsfelds zu ermitteln.

Wie bereits weiter oben kurz angedeutet, kann die Steuereinheit ferner dazu eingerichtet sein, bei einem unzulässigen Betreten des Übergangsbereichs ein Auslösen von wenigstens einer vorbestimmten Sicherheitsmaßnahme anzuweisen, insbesondere ein Stilllegen von Vorrichtungen und/oder Fahrzeugen in der Betriebsumgebung, wobei als unzulässiges Betreten des Übergangsbereichs jeglicher Vorgang zu bewerten ist, in welchem eines der Überwachungsfelder außerhalb eines freigegeben Durchfahrtkorridors betreten bzw. verletzt wird.

Gemäß einem weiteren Aspekt betrifft die vorliegende Erfindung eine Logistikeinrichtung, umfassend eine Betriebsumgebung mit einem ersten Bereich und einem zweiten Bereich sowie einem zwischen dem ersten Bereich und dem zweiten Bereich angeordneten Übergangsbereich, wobei ferner ein erfindungsgemäßes System zur Kontrolle eines Übergangs zwischen dem ersten Bereich und dem zweiten Bereich vorgesehen ist. Hierbei kann einer aus dem ersten Bereich und dem zweiten Bereich als Sicherheitsbereich in der oben bereits umrissenen Art und Weise dienen, wobei insbesondere bei einem unzulässigen Betreten des Übergangsbereichs in dem Sicherheitsbereich befindliche Vorrichtungen stillgelegt werden können.

Weiterhin betrifft die vorliegende Erfindung ein Verfahren zur Kontrolle eines Übergangs zwischen einem ersten Bereich und einem zweiten Bereich einer Betriebsumgebung, insbesondere einer Logistikeinrichtung, mittels eines Systems der oben beschriebenen Art, umfassend ein dauerhaftes Überwachen des horizontalen und gegebenenfalls des vertikalen Überwachungsfelds, und bei einem Empfangen einer Anfrage für ein Durchfahren des Übergangsbereichs von einem sich in der Betriebsumgebung fortbewegenden Fahrzeug eine Überwachung wenigstens eines Paars von Eintrittsfeldern hinsichtlich eines im Wesentlichen zeitgleichen Verletzens durch ein Fahrzeug, bei einem Feststellen eines derartigen im Wesentlichen zeitgleichen Verletzens des entsprechenden Paars von Eintrittsfeldern, ein Freigeben eines Durchfahrtkorridors durch das Überwachungsfeld, wobei der Durchfahrtkorridor eine vorbestimmte Breite und gegebenenfalls eine vorbestimmte Höhe aufweist und in Verlängerung des Paars von Eintrittsfeldern liegt, und ein Überwachen einer Durchfahrt des Fahrzeugs durch den Durchfahrtkorridor und bei einem Feststellen eines Abschlusses der Durchfahrt, ein Deaktivieren des Durchfahrtkorridors.

Hierbei versteht sich, dass die weiter oben im Zusammenhang mit der Beschreibung von Weiterbildungen und Ausführungsformen des erfindungsgemäßen Systems diskutierten zusätzlichen Merkmale ohne Weiteres auch auf ein erfindungsgemäßes Verfahren übertragbar und zusammen mit diesem anwendbar sind, beispielsweise also das mögliche Freigeben von wenigstens zwei in Breitenrichtung beabstandeten Durchfahrtkorridoren und/oder das Auslösen von wenigstens einer vorbestimmten Sicherheitsmaßnahme bei einem unzulässigen Betreten des Übergangsbereichs. Dementsprechend sollen sämtliche als Weiterbildungen eines erfindungsgemäßen Systems in den beiliegenden Ansprüchen beanspruchten Merkmalen ebenfalls im Zusammenhang mit einem erfindungsgemäßen Verfahren beansprucht sein. Es sei lediglich insbesondere erneut betont, dass das erfindungsgemäße Verfahren im Zusammenhang mit dem Empfangen der Anfrage für das Durchfahren des Übergangsbereichs ein Empfangen weiterer fahrzeugspezifischer Informationen, insbesondere eines Fahrzeugtyps und/oder einer Fahrzeugkennung, umfassen kann und/oder ein Anpassen der minimalen Zeitspanne und/oder der maximalen Zeitspanne und/oder der Höhe und/oder Breite des Durchfahrtkorridors anhand der fahrzeugspezifischen Information.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1:: eine schematische isometrische Ansicht eines erfindungsgemäßen Systems zur Kontrolle eines Übergangs zwischen einem ersten Bereich und einem zweiten Bereich in einer Betriebsumgebung;
- Figur 2a bis 2f:: schematische Darstellungen des Systems aus Figur 1 während eines Durchfahrens durch ein bzw. zwei Fahrzeuge in schematischer Draufsicht; und
- Figur 3:: ein Flussdiagramm zur Verdeutlichung der Vorgänge aus den Figuren 2a bis 2f.

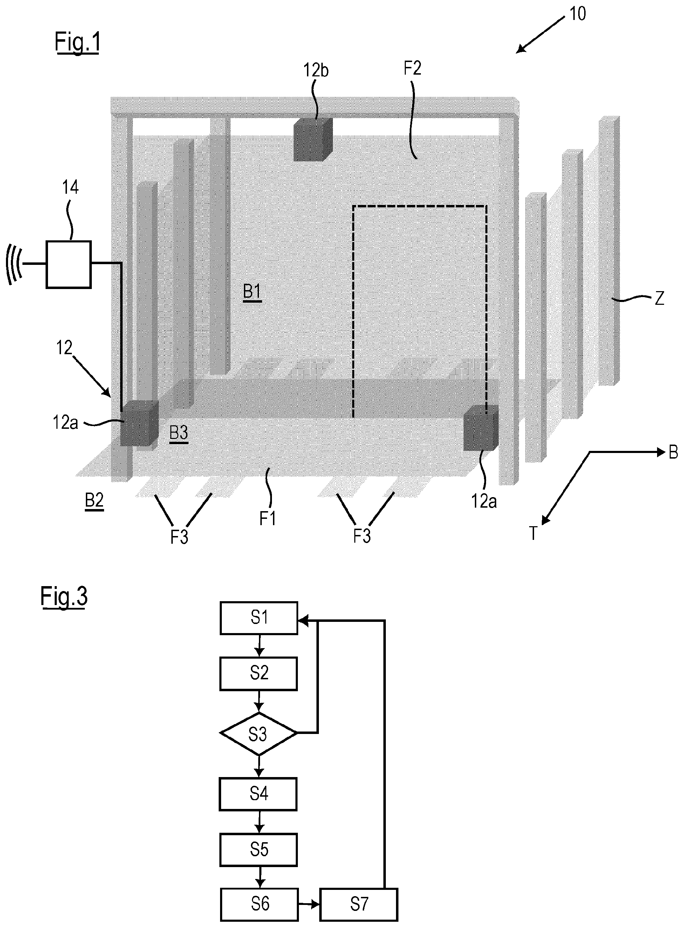

In Figur 1 ist nun zunächst ein erfindungsgemäßes System zur Kontrolle eines Übergangs zwischen einem ersten Bereich und einem zweiten Bereich in einer Betriebsumgebung, beispielsweise in einer Logistikeinrichtung, in einer schematischen isometrischen Ansicht dargestellt und ganz allgemein mit dem Bezugszeichen 10 bezeichnet. Weiterhin ist der durch einen als eine bauliche Trennung wirkende Zaun Z begrenzte und im vorliegenden Beispiel als Sicherheitsbereich wirkende erste Bereich mit B1 bezeichnet und ein frei zugänglicher Bereich mit B2 bezeichnet, wobei zwischen diesen Bereichen ein Übergangsbereich B3 vorgesehen ist, welcher durch das erfindungsgemäße System 10 überwacht wird. Hierbei erzeugt das System 10 die im Folgenden näher erläuterten Überwachungsfelder und überwacht dementsprechend, ob Übergänge zwischen dem ersten Bereich B1 und dem zweiten Bereich B2 durch den Übergangsbereich B3 hindurch in einer zulässigen Weise durchgeführt werden.

Hierzu sei ferner darauf hingewiesen, dass der eigentliche Übergang zwischen den Bereichen B1 und B2 in Form einer in dem Zaun Z vorliegenden Durchfahrt vorgesehen ist, welche an ihren beiden Seiten und nach oben abgeschlossen ist, wobei im Bereich dieser Durchfahrt eine Überwachungseinrichtung 12 mit zwei als 2d-Lidar-Sensoren ausgebildeten ersten Sensoreinheiten 12a vorgesehen ist, welche einander beiderseits des Bereichs B3 gegenüberliegen.

Ferner umfasst die Überwachungseinrichtung 12 neben hier nicht weiter dargestellten Datenverarbeitungsmitteln zusätzlich eine weitere Sensoreinheit 12b, welche mittig oberhalb des Übergangsbereichs B3 positioniert ist. Die Überwachungseinrichtung 12 spannt dementsprechend in der in Figur 1 angedeuteten Weise mittels der Sensoreinheiten 12a und 12b ein im Wesentlichen horizontal ausgerichtetes Überwachungsfeld F1 mit einer vorbestimmten Ausdehnung in einer Tiefenrichtung T, welches sich über die gesamte Breite des Übergangsbereichs B3 erstreckt, sowie ein weiteres, im Wesentlichen vertikales Überwachungsfeld F2 auf, welches in der hier dargestellten Ausführungsform in der Art eines Vorhangs die gesamte Durchfahrt zwischen dem ersten Bereich B1 und dem zweiten Bereich B2 überdeckt.

Weiterhin sei darauf hingewiesen, dass ebenfalls mittels der ersten Sensoreinheiten 12a mehrere Paare von Eintrittsfeldern F3 definiert werden, welche sich in der Tiefenrichtung T von dem horizontalen Überwachungsfeld F1 aus erstrecken und jeweils eine vorbestimmte Ausdehnung in der Breitenrichtung B und der Tiefenrichtung T aufweisen. Hierbei sei darauf hingewiesen, dass die entsprechenden Paare von Eintrittsfeldern F3 jeweils einen Abstand aufweisen, wobei die entsprechenden Abmessungen davon auf die Abmessungen von in der Betriebsumgebung befindlichen Fahrzeugen abgestimmt sind, um sicherzustellen, dass in dem im Folgenden beschriebenen Prozess lediglich entsprechende Fahrzeuge in einer erlaubten Weise den Übergangsbereich durchfahren können und nicht beispielsweise menschliche Personen.

Bezüglich der Anordnung der Sensoreinheiten 12a und 12b sei darauf hingewiesen, dass die ersten Sensoreinheiten 12a in dem Höhenbereich angeordnet sind, in welchem sie das horizontale Überwachungsfeld aufspannen, wobei bei einer Durchfahrt eines Fahrzeugs dementsprechend eine Abschattung auf der jeweils gegenüberliegenden Seite zu erwarten ist. Um nun auch gleichzeitige Durchfahrten von zwei Fahrzeugen entsprechend den in Figur 1 dargestellten rechten und linken Paaren von Eintrittsfeldern F3 zu ermöglichen, wird die weitere Sensoreinheit 12b an der Oberseite der Durchfahrt eingesetzt, welche ferner das bereits angesprochene im Wesentlichen vertikale Überwachungsfeld F2 aufspannt.

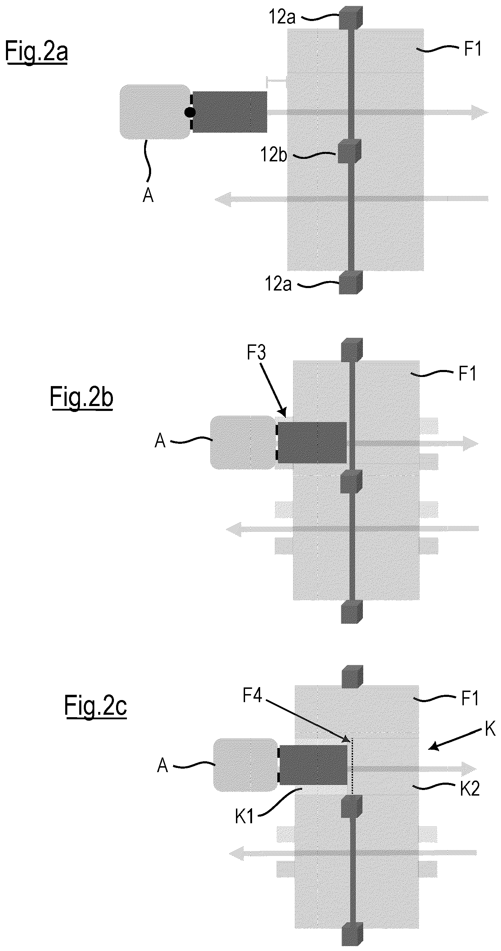

Weiterhin umfasst das erfindungsgemäße System 10 eine hier lediglich schematisch dargestellte Steuereinheit 14 welche einerseits mit der Überwachungseinrichtung 12 betriebsmäßig gekoppelt ist und ferner zu einer drahtlosen Kommunikation mit sich in der Betriebsumgebung fortbewegenden Fahrzeugen eingerichtet ist, von welchen in den Figuren 2a bis 2f jeweils eines oder zwei gezeigt sind. Hierbei ist zu beachten, dass in dem in Figur 1 dargestellten Zustand jegliche Verletzung von einem der Überwachungsfelder F1 und F2 unmittelbar als unzulässiges Betreten bzw. unzulässiger Übergang zwischen dem ersten Bereich B1 und dem zweiten Bereich B2 registriert werden würde und entsprechende Maßnahmen von der Steuereinheit 14 angeleitet werden könnten, beispielsweise das Stilllegen von bestimmten Komponenten in der Betriebsumgebung. Die Kommunikation zwischen der Steuereinheit 14 und den Fahrzeugen kann ebenfalls vermittels einer zentralen Steuereinheit der Logistikanlage erfolgen, welche mit den Fahrzeugen in Kommunikationsverbindung steht und mit welcher die Steuereinheit 14 drahtgebunden oder drahtlos verbunden ist.

Anhand der Figuren 2a bis 2e in Zusammenschau mit dem Flussdiagramm aus Figur 3 soll nun erläutert sein, in welcher Weise ein zulässiges Durchfahren des Übergangsbereichs B3 stattfinden kann. Hierzu wird zunächst in Schritt S1 aus Figur 3 und analog in Figur 2a durch ein Fahrzeug A eine Anfrage für ein Durchfahren des Übergangsbereichs B3 an die Steuereinheit 14 gesendet, wobei in diesem Zusammenhang weitere Daten von dem Fahrzeug A übertragen werden, beispielsweise eine Typenkennung, ein Fahrzeugtyp, ob das Fahrzeug momentan eine Last trägt oder nicht und ggf. welche Maße diese hat und Ähnliches. Ferner wird ermittelt, ob sich das Fahrzeug A innerhalb eines vorbestimmten maximalen Abstands von dem horizontalen Überwachungsfeld F1 befindet, beispielsweise 180mm, welcher in Figur 2a angedeutet ist. Diese Ermittlung kann anhand von durch das Fahrzeug übermittelten Positionsdaten oder mittels einer Erfassung der Fahrzeugposition durch eine weitere Sensoreinheit oder auch die bereits angesprochenen Sensoreinheiten 12a erfolgen, wie in Figur 2a angedeutet ist.

Wird eine derartige Anfrage von der Steuereinheit 14 als valide akzeptiert, da dem entsprechenden Fahrzeug A eine Durchfahrt erlaubt werden soll und sich dieses an einer geeigneten Position befindet, so werden in Schritt S2 die bereits angesprochenen Eintrittsfelder F3 aktiviert, wobei entweder lediglich ein einzelnes derartiges Paar von Eintrittsfeldern F3 geschaltet werden kann oder auch mehrere der in Figur 1 gezeigten. Hierbei kann die Aktivierung der Eintrittsfelder F3 in diesem Zusammenhang ebenfalls bedeuten, dass nur bei einer entsprechenden Anfrage, wie oben erläutert, ein Auslösen der Eintrittsfelder durch das Fahrzeug den Durchfahrtprozess wie vorgesehen fortsetzt.

Hiernach wird in Schritt S3 von der Steuereinheit 14 überwacht, dass die beiden Eintrittsfelder F3 des entsprechenden Paars nahezu gleichzeitig verletzt bzw. betreten werden, wobei hierzu eine geeignet gewählte sehr kurze Zeitspanne für das erste Verletzen von jedem Paar der Eintrittsfelder gewählt werden kann. Auf diese Weise wird sichergestellt, dass es sich bei dem das Paar von Eintrittsfeldern verletzenden Objekt in der Tat um das angemeldete Fahrzeug A handelt, da sich dieses in der angesprochenen Weise innerhalb des vorbestimmten Abstands, also beispielsweise 180 mm, von dem Überwachungsfeld F1 entfernt befindet. Sollte dies nicht der Fall sein, so endet der Prozess bereits hier und kehrt zu Schritt S1 zurück bzw. erkennt bereits ein unzulässiges Betreten eines Überwachungsfelds.

Stellt dem hingegen hierbei in Schritt S3 die Steuereinheit 14 fest, dass in der in Figur 2b gezeigten Weise in der Tat die entsprechenden Eintrittsfelder F3 nahezu gleichzeitig verletzt werden, so wird in Schritt S4 ein Durchfahrtkorridor K durch das Überwachungsfeld freigeschaltet, welcher in Figur 2c dargestellt ist und hinsichtlich des horizontalen Überwachungsfelds F1 aus zwei hintereinander angeordneten Durchfahrtsabschnitten K1 und K2 gebildet ist, während er bezogen auf das vertikale Überwachungsfeld F2 eine vorbestimmte Höhe aufweist, welche in Figur 1 bereits gestrichelt angedeutet ist. Gleichzeitig wird eine Zeitnahme begonnen, um zu überwachen, dass eine entsprechende Durchfahrt des Überwachungsbereichs B3 innerhalb eines vorbestimmten Zeitraums durchgeführt wird.

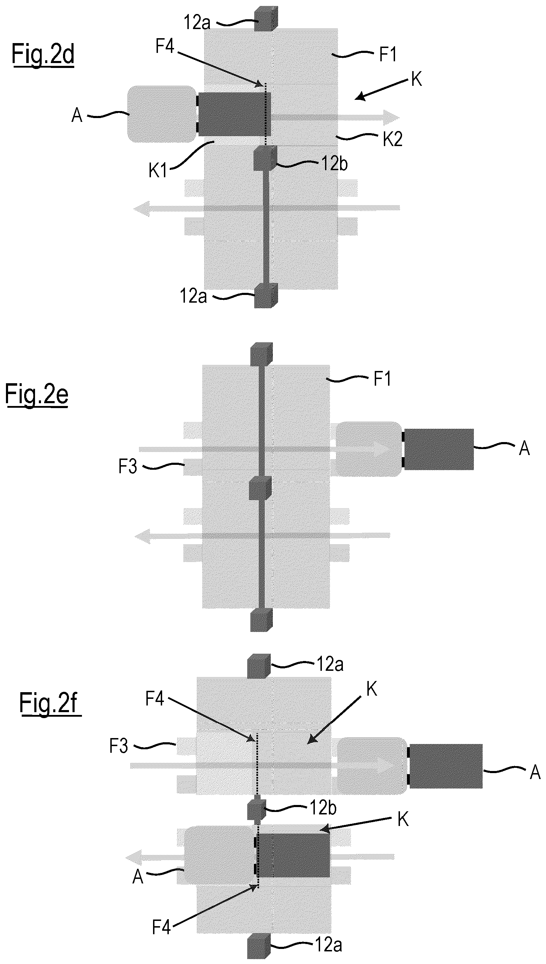

Hiernach fährt das Fahrzeug A in den Durchfahrtkorridor K ein und betritt dementsprechend zunächst einmal den ersten Durchfahrtsabschnitt K1 und anschließend den zweiten Durchfahrtsabschnitt K2, wie in Figur 2d dargestellt ist. Nach einem Verlassen des ersten Durchfahrtabschnitts K1 wäre ein erneutes Verletzen von K1 ein unerlaubtes Ereignis, auf dessen Grundlage entsprechende Maßnahmen eingeleitet werden könnten, beispielsweise eine Stilllegung der Betriebsumgebung.

Die entsprechende sequenzielle Verletzung dieser Durchfahrtsabschnitte wird von der Steuereinheit 14 in Schritt S5 überwacht, wobei nach erfolgter Durchfahrt der Zustand aus Figur 2e eingenommen wird, in welchem das Fahrzeug A den Durchfahrtkorridor K passiert hat und demzufolge keines der Überwachungsfelder mehr verletzt ist. Dieses Beenden der Durchfahrt des Fahrzeugs A durch den Durchfahrtkorridor wird in Schritt S6 erfasst und stellt den Abschluss der erlaubten Durchfahrt durch den Übergangsbereich B3 dar.

An dieser Stelle sei nun erläutert, wie durch das hier beschriebene erfindungsgemäße System 10 ein unerlaubtes Durchqueren des Übergangsbereichs B3 durch Personen mit Hilfe des vertikalen Überwachungsfelds F2 verhindert werden kann. Wenngleich auch in entsprechenden Ausführungsform ohne ein solches vertikales Überwachungsfeld F2 bereits zahlreiche Szenarien verhindert werden können, in welchen unzulässige Durchquerungen des Übergangsbereichs B3 unternommen werden, so kann alleine durch die beiden horizontal ausgedehnten und in Fahrtrichtung hintereinanderliegende Durchfahrtsabschnitte K1 und K2 nicht erkannt werden, wenn sich eine Person vor oder hinter einem Fahrzeug bewegt, da die Durchfahrtsabschnitte K1 und K2 nur eine Verletzung davon als solches erkennen, aber nicht wo die Verletzung innerhalb der Durchfahrtsabschnitte K1 und K2 stattfindet.

Beispielsweise könnte sich ein Fahrzeug von einem ersten Durchfahrtsabschnitt K1 in Richtung eines zweiten Durchfahrtsabschnitts K2 bewegen und sich hinter dem Fahrzeug eine Person befinden. Das Fahrzeug würde in Fahrtrichtung zunächst den Durchfahrtsabschnitt K1 verletzen und dann im Verlauf der Fahrt den Durchfahrtsabschnitt K2 verletzen und dann den Durchfahrtsabschnitt K1 verlassen. Die Person, die sich hinter dem Fahrzeug befindet, würde dafür sorgen, dass der Durchfahrtsabschnitt K1 länger verletzt wäre als durch den Aufenthaltsort des Fahrzeugs eigentlich zu erwarten. Allerdings würde das System 10 diese längere Verletzung des Durchfahrtsabschnitts K1 nur dann als unzulässig erkennen, wenn die Verletzung eine unzulässige Zeitdauer andauern würde, was sich leicht vermeiden lässt, wenn die Person sich in geringem Abstand zum Fahrzeug bewegt. Die Person würde hinter dem Fahrzeug von Durchfahrtsabschnitt K1 zu Durchfahrtsabschnitt K2 übertreten und schließlich hinter dem Fahrzeug aus dem Durchfahrtsabschnitt K2 heraus den Übergangsbereich B3 verlassen, ohne erkannt zu werden.

Um nun eine sich hinter oder vor dem Fahrzeug befindliche Person zu erkennen, ist es notwendig, dass zusätzlich zu den ausgedehnten Durchfahrtsabschnitten K1 und K2 ein in Fahrtrichtung sehr schmales Feld in Form des vertikalen Überwachungsfelds F2 oder in alternativen Varianten beispielsweise auch mittels eines horizontal ausgerichteten und in Fahrtrichtung sehr schmalen Überwachungsfelds oder einer Lichtschranke aufgespannt wird, so dass es bei einem geringen Abstand zwischen Fahrzeug und Person kurzzeitig zu einer Nichtverletzung dieses Felds F2 oder der Lichtschranke kommt und dieses dann anschließend durch das zweite Objekt, d.h. das Fahrzeug oder die Person, je nachdem welches davon sich vorne bzw. hinten befindet, wieder verletzt wird. Ein solches zusätzliches sehr schmales Überwachungsfeld ist in den Figuren 2c, 2d und 2f aus Gründen der Übersichtlichkeit gepunktet dargestellt und mit dem Bezugszeichen F4 bezeichnet, wobei es sich in der hier dargestellten Ausführungsform lediglich im Bereich des Durchfahrtkorridors K erstreckt. Auf diese Weise kann erkannt werden, dass sich aktuell zwei separate Objekte durch den Übergangsbereich B3 bewegen. Hierbei ist in Varianten mit dem vertikalen Überwachungsfeld zu beachten, dass die Sicherheitsfunktion des Systems 10 mit einem derartigen ausgedehnten vertikalen Feld leichter umgangen werden könnte, indem beispielsweise eine Person mit ausgestrecktem Arm oberhalb des Fahrzeugs die kurzzeitige Unterbrechung der Verletzung des vertikalen Überwachungsfelds F2 verhindert und so die Erfassung, dass es sich um zwei separate Objekte handelt, unterbindet. Bevorzugt können demnach für eine Personenerkennung auf Höhe der horizontalen Felder oder zumindest in der unteren Hälfte des Systems zusätzlich in Fahrtrichtung und vertikaler Richtung sehr schmale Felder, beispielsweise in Form sehr schmaler Schutzfelder oder Lichtschranken, aufgespannt werden, welche geeignet sind, eine kurze Nichtverletzung zwischen zwei sich bewegenden Objekten zu detektieren, die sich hintereinander durch den Übergangsbereich B3 bewegen.

Dementsprechend können die folgenden Szenarien durch das erfindungsgemäße System 10 in Zusammenwirkung mit üblichen Sensoreinheiten entsprechender Fahrzeuge abgefangen werden. Würde in einem ersten Fall eine Person vor dem Fahrzeug laufen, so würde bereits die Sensorik des Fahrzeugs das Fahrzeug aus Sicherheitsgründen stoppen und es wäre nicht möglich, das Paar von Eintrittsfeldern F3 zeitgleich zu aktivieren. Die Person würde hierdurch einen Fehler und einen Stopp des Fahrzeugs auslösen. Würde in einem zweiten Fall eine Person hinter dem Fahrzeug laufen, so würde, sobald das vertikale Überwachungsfeld F2 bzw. das sehr schmale Überwachungsfeld F4 oder die Lichtschranke einmal frei ist und wieder durchbrochen wird, ein Fehler und somit ein Stopp ausgelöst. Auch falls die Person eine Hand auf das Fahrzeug legen würde, wird wenigstens im Fall der Lichtschranke diese zunächst frei und anschließend wieder durchbrochen. Auch hierdurch würde ein Fehler und damit ein Stopp ausgelöst werden. In einem dritten denkbaren Fall könnte sich eine Person auf eine Palette setzen, wobei jedoch zusammen mit der Anfrage durch das Fahrzeug ferner Informationen über eine ggf. von dem Fahrzeug getragene Last mitgeteilt werden können, beispielsweise einschließlich einer Ladungshöhe. Auf dieser Grundlage kann die Höhe des vertikalen Überwachungsfelds F2 eingestellt werden und eine auf dem Fahrzeug oder der Last aufsitzende Person würde dementsprechend die vorgegebene Kontur überschreiten und ebenfalls einen Fehler auslösen. Ferner würde bei einer sich neben dem Fahrzeug befindlichen Person die Höhe und oder die Breite des Durchfahrtkorridors durch die Person überschritten, sodass auch in diesem Fall eine Auslösung eines Fehlers erfolgen würde.

In jedem Fall endet das erfindungsgemäße Verfahren an dieser Stelle in Schritt S7, in welchem die Überwachungsfelder wieder auf ihren anfänglichen Zustand entsprechend der Darstellung aus Figur 1 geschaltet werden. Hierbei sei ferner darauf hingewiesen, dass sowohl die Zeitspannen für ein sicheres Durchfahren des Übergangsbereichs B3 als auch beispielsweise die Höhe des Durchfahrtkorridors, welche in Figur 1 gestrichelt dargestellt ist, anhand der von dem Fahrzeug A an die Steuereinheit 14 übermittelten fahrzeugspezifischen Daten angepasst werden können.

Ferner sei darauf hingewiesen, dass jegliche Verletzung eines der Überwachungsfelder F1 und F2 außerhalb des Durchfahrtkorridors K stets als unzulässiger Versuch eines Passierens des Übergangsbereichs B3 bewertet wird und in Reaktion hierauf von der Steuereinheit 14 geeignete Maßnahmen getroffen werden können, beispielsweise ein Stilllegen einzelner Komponenten in der Betriebsumgebung.

Zuletzt sei ferner auf die Figur 2f verwiesen, in welcher ein Vorgang dargestellt ist, in welchem zwei Fahrzeuge A den Übergangsbereich B3 gleichzeitig in entgegengesetzte Richtungen durchqueren. Hierbei hat jedes der beiden Fahrzeug A einen Prozess eines Anfragens für ein Durchfahren des Übergangsbereichs B3 an die Steuereinheit 14 durchlaufen, wobei die beiden daraufhin freigeschalteten parallelen Durchfahrtkorridore K jeweils in derselben Weise im Rahmen des oben beschriebenen Prozesses überwacht werden. Hierbei erfüllt die weitere Sensoreinheit 12b aufgrund der jeweiligen Abschattungen hinter den Fahrzeugen A aus Sicht der Sensoreinheiten 12a nicht nur die Aufgabe, das vertikale Überwachungsfeld F2 aufzuspannen, sondern ebenfalls den zentralen Bereich des horizontalen Überwachungsfelds F1 zwischen den beiden Durchfahrtkorridoren K zu überwachen.

## Patentansprüche

1. System (10) zur Kontrolle eines Übergangs zwischen einem ersten Bereich (B1) und einem zweiten Bereich (B2) in einer Betriebsumgebung, insbesondere einer Logistikeinrichtung, umfassend:
- einen Übergangsbereich (B3), welcher den ersten Bereich (B1) von dem zweiten Bereich (B2) der Betriebsumgebung trennt und welcher an beiden Seiten in einer Breitenrichtung (B) begrenzt ist;
- eine Überwachungseinrichtung (12), welche wenigstens zwei einander bezüglich des Übergangsbereichs (B3) gegenüberliegende erste Sensoreinheiten (12a) umfasst und dazu eingerichtet ist, in dem Übergangsbereich (B3) aufzuspannen:
o ein im Wesentlichen horizontal ausgerichtetes Überwachungsfeld (F1) mit einer vorbestimmten Ausdehnung in einer Tiefenrichtung (T), welches sich über die gesamte Breite des Übergangsbereichs (B3) erstreckt; und
- eine Steuereinheit (14), welche mit der Überwachungseinrichtung (12) betriebsmäßig gekoppelt und ferner zu einer Kommunikation mit sich in der Betriebsumgebung fortbewegenden Fahrzeugen (A) eingerichtet ist;
**dadurch gekennzeichnet, dass** die Überwachungsvorrichtung ferner dazu eingerichtet ist, wenigstens ein Paar von Eintrittsfeldern (F3), welche sich in der Tiefenrichtung (T) bezüglich des Überwachungsfelds (F1) erstrecken und jeweils eine vorbestimmte Ausdehnung in der Breitenrichtung (B) und der Tiefenrichtung (T) aufweisen, aufzuspannen; und
die Steuereinheit (14) ferner dazu eingerichtet ist, von den Fahrzeugen (A) Anfragen für ein Durchfahren des Übergangsbereichs (B3) zu empfangen und bei einem Empfang einer derartigen Anfrage die folgenden Schritte auszuführen:
- Überwachen eines der Paare von Eintrittsfeldern (F3) hinsichtlich eines im Wesentlichen zeitgleichen Verletzens beider Eintrittsfelder dieses Paars durch ein Fahrzeug (A);
- bei einem Feststellen eines derartigen im Wesentlichen zeitgleichen Verletzens des entsprechenden Paars von Eintrittsfeldern (F3), Freigeben eines Durchfahrtkorridors (K) durch das Überwachungsfeld (F1),
wobei der Durchfahrtkorridor (K) eine vorbestimmte Breite aufweist und in Verlängerung des Paars von Eintrittsfeldern (F3) liegt; und
- Überwachen der Durchfahrt des Fahrzeugs (A) durch den Durchfahrtkorridor (K) und bei einem Feststellen eines Abschlusses der Durchfahrt, Deaktivieren des Durchfahrtkorridors (K).

2. System (10) nach einem der vorhergehenden Ansprüche,
wobei die Steuereinheit (14) ferner dazu eingerichtet ist, ein Aktivieren eines Paars von Eintrittsfeldern (F3) erst nach einem Empfangen einer Anfrage für ein Durchfahren des Übergangsbereichs (B3) anzuweisen.

3. System (10) nach einem der vorhergehenden Ansprüche,
wobei die Steuereinheit (14) ferner dazu eingerichtet ist, den Durchfahrtkorridor (K) bezüglich einer vorgesehenen Durchfahrtrichtung von den Eintrittsfeldern (F3) aus in einen ersten Durchfahrtabschnitt (K1) und einen zweiten Durchfahrtabschnitt (K2) zu unterteilen und zu überwachen, dass zunächst der erste Durchfahrtsabschnitt (K1) und dann der zweite Durchfahrtsabschnitt (K2) betreten wird und/oder
wobei jedem Paar von Eintrittsfeldern (F3) bezogen auf das horizontale Überwachungsfeld (F1) ein weiteres Paar von Eintrittsfeldern (F3) gegenüberliegt und die Steuereinheit (14) ferner dazu eingerichtet ist, mittels der Überwachung der Eintrittsfelder (F3) und des horizontalen Überwachungsfelds (F1) eine Durchfahrtrichtung eines entsprechenden Fahrzeugs (A) zu ermitteln.

4. System (10) nach einem der vorhergehenden Ansprüche,
wobei die Steuereinheit (14) ferner dazu eingerichtet ist, nach einem Empfangen einer Anfrage für ein Durchfahren des Übergangsbereichs (B3) eine Zeitnahme zu beginnen und die Eintrittsfelder (F3) und/oder den Durchfahrtkorridor (K) nach einer vorbestimmten maximalen Zeitspanne zu deaktivieren und/oder zu überwachen, dass ein Durchfahren des Durchfahrtkorridors (K) wenigstens eine vorbestimmte minimale Zeitspanne benötigt.

5. System (10) nach einem der vorhergehenden Ansprüche,
wobei die Steuereinheit (14) ferner dazu eingerichtet ist, wenigstens zwei in Breitenrichtung (B) beabstandete Durchfahrtkorridore (K) mit diesen zugeordneten Eintrittsfeldern (F3) freigeben zu können.

6. System (10) nach einem der vorhergehenden Ansprüche,
wobei die Überwachungseinrichtung (12) ferner wenigstens eine weitere Sensoreinheit (12b) umfasst, welche oberhalb des horizontalen Überwachungsfelds (F1) angeordnet ist.

7. System (10) nach dem vorhergehenden Anspruch,
wobei die Überwachungseinrichtung (12) ferner dazu eingerichtet ist, mittels der wenigstens einen weiteren Sensoreinheit (12b) ein weiteres, im Wesentlichen vertikales Überwachungsfeld (F2) aufzuspannen, wobei der wenigstens eine Durchfahrtkorridor (K) mittels des vertikalen Überwachungsfelds (F2) hinsichtlich seiner Höhe begrenzbar ist und/oder
die Überwachungseinrichtung (12) ferner dazu eingerichtet ist, ein schmales Feld innerhalb des wenigstens einen Durchfahrtkorridors (K) aufzuspannen, insbesondere mittels eines horizontal ausgerichteten, in Fahrtrichtung sehr schmalen Überwachungsfelds (F4) oder einer quer zur Fahrtrichtung verlaufenden Lichtschranke.

8. System (10) nach Anspruch 4 oder Anspruch 7,
wobei die Steuereinheit (14) ferner dazu eingerichtet ist, die minimale Zeitspanne und/oder die maximale Zeitspanne und/oder die Höhe und/oder Breite des Durchfahrtkorridors (K) anhand wenigstens einer Eigenschaft des entsprechenden Fahrzeugs (A) festzulegen, welche in Form von fahrzeugspezifischen Informationen im Zusammenhang mit der Anfrage für ein Durchfahren empfangen worden ist.

9. System (10) nach einem der vorhergehenden Ansprüche,
wobei die Steuereinheit (14) ferner dazu eingerichtet ist, eine Anfrage für ein Durchfahren des Übergangsbereichs (B3) lediglich dann zu akzeptieren, wenn ein momentaner Abstand des entsprechenden Fahrzeugs (A) von dem horizontalen Überwachungsfeld (F1) unterhalb eines vorbestimmten maximalen Abstands liegt, welcher vorzugsweise 180mm oder weniger beträgt.

10. System (10) nach einem der vorhergehenden Ansprüche,
wobei die Steuereinheit (14) ferner dazu eingerichtet ist, bei einem unzulässigen Betreten des Übergangsbereichs (B3) ein Auslösen wenigstens einer vorbestimmten Sicherheitsmaßnahme anzuweisen, insbesondere ein Stilllegen von Vorrichtungen und/oder Fahrzeugen in der Betriebsumgebung.

11. Logistikeinrichtung, umfassend eine Betriebsumgebung mit einem ersten Bereich (B1) und einem zweiten Bereich (B2) sowie einem zwischen dem ersten Bereich (B1) und dem zweiten Bereich (B2) angeordneten Übergangsbereich (B3), ferner umfassend ein System (10) zur Kontrolle eines Übergangs zwischen dem ersten Bereich (B1) und dem zweiten Bereich (B2) nach einem der vorhergehenden Ansprüche.

12. Logistikeinrichtung nach dem vorhergehenden Anspruch,
wobei einer aus dem ersten Bereich (B1) und dem zweiten Bereich (B2) als Sicherheitsbereich dient, wobei bei einem unzulässigen Betreten des Übergangsbereichs (B3) in dem Sicherheitsbereich befindliche Vorrichtungen stillgelegt werden.

13. Verfahren zur Kontrolle eines Übergangs zwischen einem ersten Bereich (B1) und einem zweiten Bereich (B2) einer Betriebsumgebung, insbesondere einer Logistikeinrichtung, mittels eines Systems (10) nach einem der Ansprüche 1 bis 10, umfassend:
- dauerhaftes Überwachen des horizontalen (F1) und ggf. des vertikalen Überwachungsfelds (F2) und/oder des schmalen Felds;
- bei einem Empfangen einer Anfrage für ein Durchfahren des Übergangsbereichs (B3) von einem sich in der Betriebsumgebung fortbewegenden Fahrzeug (A):
o Überwachen eines Paars von Eintrittsfeldern (F3) hinsichtlich eines im Wesentlichen zeitgleichen Verletzens beider Eintrittsfelder dieses Paars durch ein Fahrzeug (A);
o bei einem Feststellen eines derartigen im Wesentlichen zeitgleichen Verletzens des entsprechenden Paars von Eintrittsfeldern (F3), Freigeben eines Durchfahrtkorridors (K) durch das wenigstens eine Überwachungsfeld (F1),
wobei der Durchfahrtkorridor (K) eine vorbestimmte Breite und ggf. eine vorbestimmte Höhe aufweist und in Verlängerung des Paars von Eintrittsfeldern (F3) liegt;
o Überwachen der Durchfahrt des Fahrzeugs (A) durch den Durchfahrtkorridor (K) und bei einem Feststellen eines Abschlusses der Durchfahrt, Deaktivieren des Durchfahrtkorridors (K).

14. Verfahren nach dem vorhergehenden Anspruch,
ferner umfassend im Zusammenhang mit dem Empfangen der Anfrage für das Durchfahren des Übergangsbereichs (B3), Empfangen weiterer fahrzeugspezifischer Informationen, insbesondere eines Fahrzeugtyps und/oder einer Fahrzeugkennung.

15. Verfahren nach dem vorhergehenden Anspruch,
ferner umfassend ein Anpassen der minimalen Zeitspanne und/oder der maximalen Zeitspanne und/oder der Höhe des Durchfahrtkorridors anhand der fahrzeugspezifischen Informationen.

## Claims

1. System (10) for controlling a transition between a first area (B1) and a second area (B2) in an operating environment, in particular a logistics facility, comprising:
- a transition area (B3), which separates the first area (B1) from the second area (B2) of the operating environment and which is delimited on both sides in a width direction (B);
- a monitoring device (12), which comprises at least two first sensor units (12a) that are opposite one another with respect to the transition area (B3) and which is configured to span, in the transition area (B3):
o a substantially horizontally oriented monitoring field (F1) having a predetermined extent in a depth direction (T), which extends across the entire width of the transition area (B3); and
- a control unit (14), which is operatively coupled to the monitoring device (12) and is further configured for communication with vehicles (A) moving in the operating environment;
**characterized in that** the monitoring device is further configured to span at least one pair of entry fields (F3), which extend in the depth direction (T) with respect to the monitoring field (F1) and each have a predetermined extent in the width direction (B) and the depth direction (T); and
the control unit (14) is further configured to receive requests from the vehicles (A) for a passage through the transition area (B3) and, upon receipt of such a request, to carry out the following steps:
- monitoring one of the pairs of entry fields (F3) with respect to a substantially simultaneous violation of both entry fields of this pair by a vehicle (A);
- upon determining such a substantially simultaneous violation of the corresponding pair of entry fields (F3), releasing a passage corridor (K) through the monitoring field (F1), wherein the passage corridor (K) has a predetermined width and lies in extension of the pair of entry fields (F3); and
- monitoring the passage of the vehicle (A) through the passage corridor (K) and, upon determining a completion of the passage, deactivating the passage corridor (K).

2. System (10) according to one of the preceding claims,
wherein the control unit (14) is further configured to instruct an activation of a pair of entry fields (F3) only after receiving a request for a passage through the transition area (B3).

3. System (10) according to one of the preceding claims,
wherein the control unit (14) is further configured to subdivide the passage corridor (K) with respect to an intended passage direction, starting from the entry fields (F3), into a first passage section (K1) and a second passage section (K2) and to monitor that first the first passage section (K1) and then the second passage section (K2) is entered, and/or
wherein each pair of entry fields (F3) has a further pair of entry fields (F3) opposite to it with respect to the horizontal monitoring field (F1), and the control unit (14) is further configured to determine a passage direction of a corresponding vehicle (A) by means of the monitoring of the entry fields (F3) and of the horizontal monitoring field (F1).

4. System (10) according to one of the preceding claims,
wherein the control unit (14) is further configured to begin a timing upon receiving a request for a passage through the transition area (B3) and to deactivate the entry fields (F3) and/or the passage corridor (K) after a predetermined maximum time period and/or to monitor that a passage through the passage corridor (K) requires at least a predetermined minimum time period.

5. System (10) according to one of the preceding claims,
wherein the control unit (14) is further configured to be able to release at least two passage corridors (K) spaced apart in the width direction (B) with entry fields (F3) assigned to them.

6. System (10) according to one of the preceding claims,
wherein the monitoring device (12) further comprises at least one further sensor unit (12b), which is arranged above the horizontal monitoring field (F1).

7. System (10) according to the preceding claim,
wherein the monitoring device (12) is further configured to span a further, substantially vertical monitoring field (F2) by means of the at least one further sensor unit (12b), wherein the at least one passage corridor (K) is limitable in terms of its height by means of the vertical monitoring field (F2), and/or the monitoring device (12) is further configured to span a narrow field within the at least one passage corridor (K), in particular by means of a horizontally oriented monitoring field (F4) that is very narrow in the direction of travel, or a light barrier running transversely to the direction of travel.

8. System (10) according to claim 4 or claim 7,
wherein the control unit (14) is further configured to determine the minimum time period and/or the maximum time period and/or the height and/or width of the passage corridor (K) on the basis of at least one property of the corresponding vehicle (A), which has been received in the form of vehicle-specific information in connection with the request for a passage.

9. System (10) according to one of the preceding claims,
wherein the control unit (14) is further configured to accept a request for a passage through the transition area (B3) only if an instantaneous distance of the corresponding vehicle (A) from the horizontal monitoring field (F1) is below a predetermined maximum distance, which preferably amounts to 180 mm or less.

10. System (10) according to one of the preceding claims,
wherein the control unit (14) is further configured to instruct the triggering of at least one predetermined safety measure upon an unauthorized entry into the transition area (B3), in particular a shutting down of devices and/or vehicles in the operating environment.

11. Logistics facility, comprising an operating environment having a first area (B1) and a second area (B2) as well as a transition area (B3) arranged between the first area (B1) and the second area (B2), further comprising a system (10) for controlling a transition between the first area (B1) and the second area (B2) according to one of the preceding claims.

12. Logistics facility according to the preceding claim,
wherein one of the first area (B1) and the second area (B2) serves as a safety area, wherein, upon an unauthorized entry into the transition area (B3), devices located in the safety area are shut down.

13. Method for controlling a transition between a first area (B1) and a second area (B2) of an operating environment, in particular a logistics facility, by means of a system (10) according to one of claims 1 to 10, comprising:
- continuously monitoring the horizontal monitoring field (F1) and, where applicable, the vertical monitoring field (F2) and/or the narrow field;
- upon receiving a request for a passage through the transition area (B3) from a vehicle (A) moving in the operating environment:
o monitoring a pair of entry fields (F3) with respect to a substantially simultaneous violation of both entry fields of this pair by a vehicle (A);
o upon determining such a substantially simultaneous violation of the corresponding pair of entry fields (F3), releasing a passage corridor (K) through the at least one monitoring field (F1), wherein the passage corridor (K) has a predetermined width and, where applicable, a predetermined height and lies in extension of the pair of entry fields (F3);
o monitoring the passage of the vehicle (A) through the passage corridor (K) and, upon determining a completion of the passage, deactivating the passage corridor (K).

14. Method according to the preceding claim,
further comprising, in connection with the receiving of the request for the passage through the transition area (B3), receiving further vehicle-specific information, in particular a vehicle type and/or a vehicle identifier.

15. Method according to the preceding claim,
further comprising adapting the minimum time period and/or the maximum time period and/or the height of the passage corridor on the basis of the vehicle-specific information.

## Revendications

1. Système (10) de contrôle d'une transition entre une première zone (B1) et une deuxième zone (B2) dans un environnement d'exploitation, en particulier une installation logistique, comprenant :
• une zone de transition (B3) qui sépare la première zone (B1) de la deuxième zone (B2) de l'environnement d'exploitation et qui est délimitée des deux côtés dans une direction de la largeur (B) ;
• un dispositif de surveillance (12) qui comprend au moins deux premières unités de capteur (12a) opposées l'une à l'autre par rapport à la zone de transition (B3) et qui est agencé pour définir dans la zone de transition (B3) :
• un champ de surveillance (F1) orienté sensiblement horizontalement avec une étendue prédéterminée dans une direction de la profondeur (T), qui s'étend sur toute la largeur de la zone de transition (B3) ; et
• une unité de commande (14) qui est couplée de manière opérationnelle au dispositif de surveillance (12) et qui est en outre agencée pour communiquer avec des véhicules (A) se déplaçant dans l'environnement d'exploitation ;
**caractérisé en ce que** le dispositif de surveillance est en outre agencé pour définir au moins une paire de champs d'entrée (F3) s'étendant dans la direction de la profondeur (T) par rapport au champ de surveillance (F1) et présentant chacun une étendue prédéterminée dans la direction de la largeur (B) et la direction de la profondeur (T) ; et l'unité de commande (14) est en outre agencée pour recevoir des véhicules (A) des demandes de passage à travers la zone de transition (B3) et, lors de la réception d'une telle demande, pour exécuter les étapes suivantes :
• surveiller l'une des paires de champs d'entrée (F3) en ce qui concerne une violation sensiblement simultanée des deux champs d'entrée de cette paire par un véhicule (A) ;
• lors de la détection d'une telle violation sensiblement simultanée de la paire correspondante de champs d'entrée (F3), libérer un couloir de passage (K) à travers le champ de surveillance (F1), le couloir de passage (K) présentant une largeur prédéterminée et se trouvant dans le prolongement de la paire de champs d'entrée (F3) ; et
• surveiller le passage du véhicule (A) à travers le couloir de passage (K) et, lors de la détection d'une fin du passage, désactiver le couloir de passage (K).

2. Système (10) selon l'une quelconque des revendications précédentes, dans lequel l'unité de commande (14) est en outre agencée pour ne commander une activation d'une paire de champs d'entrée (F3) qu'après la réception d'une demande de passage à travers la zone de transition (B3).

3. Système (10) selon l'une quelconque des revendications précédentes, dans lequel l'unité de commande (14) est en outre agencée pour diviser le couloir de passage (K), par rapport à une direction de passage prévue depuis les champs d'entrée (F3), en un premier tronçon de passage (K1) et un deuxième tronçon de passage (K2) et pour surveiller qu'on pénètre d'abord dans le premier tronçon de passage (K1) puis dans le deuxième tronçon de passage (K2), et/ou
dans lequel chaque paire de champs d'entrée (F3) est opposée à une autre paire de champs d'entrée (F3) par rapport au champ de surveillance horizontal (F1) et l'unité de commande (14) est en outre agencée pour déterminer une direction de passage d'un véhicule (A) correspondant au moyen de la surveillance des champs d'entrée (F3) et du champ de surveillance horizontal (F1).

4. Système (10) selon l'une quelconque des revendications précédentes, dans lequel l'unité de commande (14) est en outre agencée pour démarrer un chronométrage après avoir reçu une demande de passage à travers la zone de transition (B3) et pour désactiver les champs d'entrée (F3) et/ou le couloir de passage (K) après une durée maximale prédéterminée et/ou pour surveiller qu'un passage à travers le couloir de passage (K) nécessite au moins une durée minimale prédéterminée.

5. Système (10) selon l'une quelconque des revendications précédentes, dans lequel l'unité de commande (14) est en outre agencée pour pouvoir libérer au moins deux couloirs de passage (K) espacés dans la direction de la largeur (B) avec des champs d'entrée (F3) associés à ceux-ci.

6. Système (10) selon l'une quelconque des revendications précédentes, dans lequel le dispositif de surveillance (12) comprend en outre au moins une autre unité de capteur (12b) disposée au-dessus du champ de surveillance horizontal (F1).

7. Système (10) selon la revendication précédente, dans lequel le dispositif de surveillance (12) est en outre agencé pour définir, au moyen de l'au moins une autre unité de capteur (12b), un autre champ de surveillance (F2) sensiblement vertical, l'au moins un couloir de passage (K) pouvant être limité en hauteur au moyen du champ de surveillance vertical (F2) et/ou
le dispositif de surveillance (12) est en outre agencé pour définir un champ étroit à l'intérieur de l'au moins un couloir de passage (K), en particulier au moyen d'un champ de surveillance (F4) orienté horizontalement, très étroit dans le sens de déplacement ou d'une barrière lumineuse s'étendant transversalement au sens de déplacement.

8. Système (10) selon la revendication 4 ou la revendication 7, dans lequel l'unité de commande (14) est en outre agencée pour fixer la durée minimale et/ou la durée maximale et/ou la hauteur et/ou la largeur du couloir de passage (K) en fonction d'au moins une propriété du véhicule (A) correspondant, qui a été reçue sous la forme d'informations spécifiques au véhicule en relation avec la demande de passage.

9. Système (10) selon l'une quelconque des revendications précédentes, dans lequel l'unité de commande (14) est en outre agencée pour n'accepter une demande de passage à travers la zone de transition (B3) que si une distance instantanée du véhicule (A) correspondant par rapport au champ de surveillance horizontal (F1) est inférieure à une distance maximale prédéterminée, qui est de préférence de 180 mm ou moins.

10. Système (10) selon l'une quelconque des revendications précédentes, dans lequel l'unité de commande (14) est en outre agencée pour commander le déclenchement d'au moins une mesure de sécurité prédéterminée en cas d'accès non autorisé à la zone de transition (B3), en particulier la mise à l'arrêt de dispositifs et/ou de véhicules dans l'environnement d'exploitation.

11. Installation logistique comprenant un environnement d'exploitation avec une première zone (B1) et une deuxième zone (B2) ainsi qu'une zone de transition (B3) disposée entre la première zone (B1) et la deuxième zone (B2), comprenant en outre un système (10) de contrôle d'une transition entre la première zone (B1) et la deuxième zone (B2) selon l'une quelconque des revendications précédentes.

12. Installation logistique selon la revendication précédente, dans laquelle l'une parmi la première zone (B1) et la deuxième zone (B2) sert de zone de sécurité, des dispositifs situés dans la zone de sécurité étant mis à l'arrêt en cas d'accès non autorisé à la zone de transition (B3).

13. Procédé de contrôle d'une transition entre une première zone (B1) et une deuxième zone (B2) d'un environnement d'exploitation, en particulier d'une installation logistique, au moyen d'un système (10) selon l'une quelconque des revendications 1 à 10, comprenant :
• surveiller en permanence le champ de surveillance horizontal (F1) et le cas échéant vertical (F2) et/ou le champ étroit ;
• lors de la réception d'une demande de passage à travers la zone de transition (B3) en provenance d'un véhicule (A) se déplaçant dans l'environnement d'exploitation :
• surveiller une paire de champs d'entrée (F3) en ce qui concerne une violation sensiblement simultanée de cette paire par un véhicule (A) ;
• lors de la détection d'une telle violation sensiblement simultanée de la paire correspondante de champs d'entrée (F3), libérer un couloir de passage (K) à travers l'au moins un champ de surveillance (F1), le couloir de passage (K) présentant une largeur prédéterminée et le cas échéant une hauteur prédéterminée et se trouvant dans le prolongement de la paire de champs d'entrée (F3) ;
• surveiller le passage du véhicule (A) à travers le couloir de passage (K) et, lors de la détection d'une fin du passage, désactiver le couloir de passage (K).

14. Procédé selon la revendication précédente, comprenant en outre, en relation avec la réception de la demande de passage à travers la zone de transition (B3), recevoir d'autres informations spécifiques au véhicule, en particulier un type de véhicule et/ou une identification de véhicule.

15. Procédé selon la revendication précédente, comprenant en outre adapter la durée minimale et/ou la durée maximale et/ou la hauteur du couloir de passage en fonction des informations spécifiques au véhicule.
